# EUROPEAN PATENT APPLICATION

(11) **EP 2 157 735 A1**
(43) Date of publication of application: **24.02.2010**
(21) Application number: 08784096.3
(22) Date of filing: 22.08.2008
(51) Int. Cl.: H04L 12/28

(54) **A METHOD, COMMUNICATION SYSTEM AND RELATED EQUIPMENT FOR LOCATING USER RESOURCE**

(30) Priority: 27.08.2007 CN 200710145513
(71) Applicant: Huawei Technologies Co., Ltd., Shenzhen, Guangdong 518129 (CN)
(72) Inventor: HUANG, Yong c/o Huawei Technologies Co.Ltd., Longgang District 518129, Shenzhen (CN); ZHA, Min c/o Huawei Technologies Co.Ltd., Longgang District 518129, Shenzhen (CN)
(74) Representative: Kreuz, Georg Maria
(86) International application number: PCT/CN2008/072105
(87) International publication number: WO 2009/030142

(57) **Abstract**

A method, a communication system, and related equipment for locating user resources are provided for realizing user resource location in the case that resource managers (RMs) are organized in a tree structure. The method includes the following steps. A second RM receives user location related information sent by a first RM. The second RM locates user resources according to the user location related information. A communication system and some related equipment are also provided. The user resource location can be effectively realized in the case that RMs are organized in a tree structure.

## Description

### FIELD OF THE TECHNOLOGY

The present invention relates to the field of communications, and more particularly to a method, a communication system, and related equipment for locating user resources.

### BACKGROUND OF THE INVENTION

In a communication network, especially a next generation network (NGN), it is an important technology to provide quality of service (QoS) guarantee for data flows. Currently, an access network QoS control architecture is under research in the Telecommunication and Internet converged Services and Protocols for Advanced Networking (TISPAN).

A QoS control functional architecture proposed by the TISPAN is session based. Actually, one metropolitan area has approximately 100,000 to 1,000,000 access users, and currently, it is difficult for one resource manager (RM) to deal with such a large number of user's QoS session requests. A common solution is to divide the users into different areas and manage the users by different RMs, and a metropolitan core area is shared by all users and requires unified admission control management. In the QoS control architecture based on the TISPAN, the RMs may be organized in a tree structure to manage all resources of the metropolitan area in view of actual applications in an access converged network and a metropolitan area network (MAN).

In the process of realizing the present invention, the inventors found through research that the prior art does not disclose how to locate user resources in the case that the RMs are organized in a tree structure.

### SUMMARY OF THE INVENTION

Accordingly, the present invention is directed to a method, a communication system, and related equipment for locating user resources, which are applicable to realize user resource location in the case that RMs are organized in a tree structure.

As a first aspect, the present invention provides a method for locating user resources, which includes the following steps. A second RM receives user location related information sent by a first RM. The second RM locates user resources according to the user location related information.

As a second aspect, the present invention provides a communication system, which includes a first RM and a second RM.

The first RM is adapted to send a QoS request containing a user identifier (ID) to the second RM. The second RM is adapted to determine corresponding user access location information according to the user ID in the QoS request, and locate user resources according to the user access location information.

In a particular implementation form according to the second aspect, the present invention provides another communication system, which includes a first RM and a second RM.

The first RM is adapted to determine corresponding user access location information according to a user ID in a received QoS request and send the user access location information to the second RM. The second RM locates user resources according to the user access location information sent by the first RM.

As a third aspect, the present invention provides an RM, which includes a second receiving unit, a first query unit, and a second forwarding unit. The second receiving unit is adapted to receive a QoS request containing a user ID. The first query unit is adapted to query corresponding user access location information according to the user ID in the QoS request. The second forwarding unit is adapted to send the user access location information obtained by query to another RM.

In a particular implementation form according to the third aspect, the present invention provides another RM, which includes a third receiving unit, a second query unit, and a first locating unit.

The third receiving unit is adapted to receive a QoS request containing a user ID sent by another RM.

The second query unit is adapted to query corresponding user access location information according to the user ID in the QoS request.

The first locating unit is adapted to locate user resources according to the user access location information.

In the embodiments of the present invention, a first RM sends user location related information to a second RM, and the second RM locates user resources according to the user location related information, and thus the second RM can obtain user location related information of a user and thus can realize the user resource location in the case that the RMs are organized in a tree structure.

### BRIEF DESCRIPTION OF THE DRAWINGS

FIG. 1 is a schematic view of an embodiment of a communication system in the embodiments of the present invention;
FIG. 2 is a schematic view of an embodiment of a first RM in the embodiments of the present invention;
FIG. 3 is a schematic view of an embodiment of a second RM in the embodiments of the present invention;
FIG. 4 is a schematic view of another embodiment of the first RM in the embodiments of the present invention;
FIG. 5 is a schematic view of another embodiment of the second RM in the embodiments of the present invention;
FIG. 6 is a signaling flow chart of an embodiment of a method for locating user resources in the embodiments of the present invention; and
FIG. 7 is a signaling flow chart of another embodiment of the method for locating user resources in the embodiments of the present invention.

### DETAILED DESCRIPTION OF THE EMBODIMENTS

In the embodiments of the present invention, a method, a communication system, and related equipment for locating user resources are provided for realizing user resource location in the case that RMs are organized in a tree structure.

In the embodiments of the present invention, since a first RM sends user access location information to a second RM, the second RM can locate user resources according to the received user access location information, so as to realize user resource location in the case that RMs are organized in a tree structure.

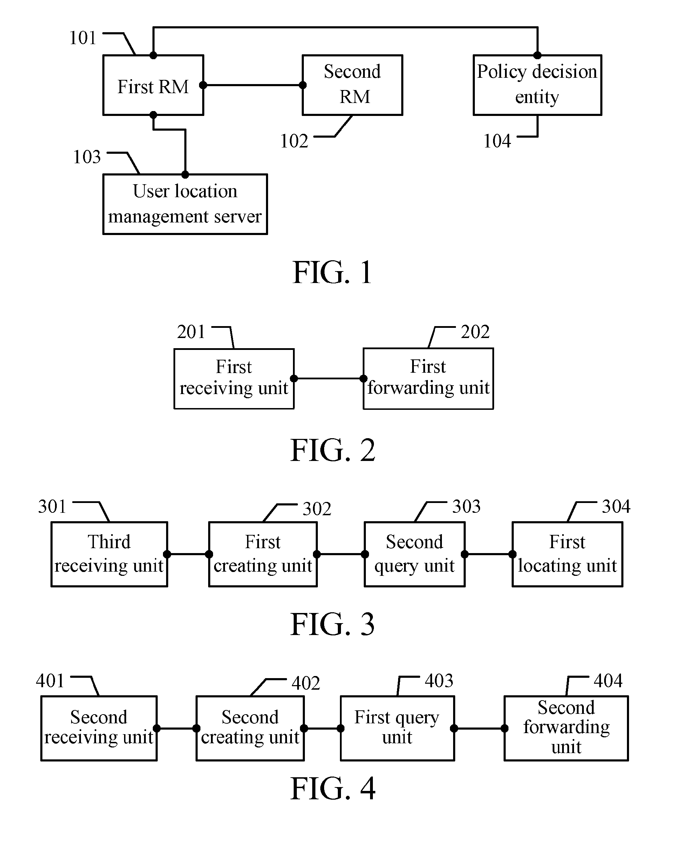

A communication system in the embodiments of the present invention is introduced first. Referring to FIG. 1, an embodiment of the communication system in the embodiments of the present invention includes a policy decision entity 104, a user location management server 103, a first RM 101, and a second RM 102.

The policy decision entity 104 is adapted to send a QoS request containing a user ID to the first RM 101.

The user location management server 103 is adapted to send user IDs and user access location information to the first RM 101 through an E4 interface.

The first RM 101 1 is adapted to receive the user IDs and the user access location information sent by the user location management server 103, receive the QoS request containing the user ID sent by the policy decision entity 104, and send the user access location information to the second RM 102.

The second RM 102 is adapted to locate user resources according to the user access location information sent by the first RM 101.

The embodiment of the present invention is specifically implemented in the following two solutions.

### I. E4 agent solution

In this solution, the first RM 101 sends user IDs and the user access location information to the second RM 102, and then the second RM 102 stores the user IDs and the corresponding user access location information, that is, creates corresponding relations between the user IDs and the user access location information. After the policy decision entity 104 sends a QoS request containing a user ID A to the first RM 101, the first RM 101 forwards the QoS request to the second RM 102. According to the user ID A in the QoS request, the second RM 102 queries corresponding user access location information in the stored user IDs and user access location information, that is, queries user access location information corresponding to the user ID A according to the created corresponding relations and the acquired user ID A, and locates user resources according to the user access location information. The step of locating the user resources belongs to the prior art, which will not be described herein again.

In this embodiment, the second RM 102 mainly includes a storage module and a query processing module.

The storage module is adapted to store a corresponding relation table between user IDs and user access location information.

The query processing module is adapted to query required user access location information in the corresponding relation table between user IDs and user access location information according to the user ID in the received QoS request and then locate user resources.

Different functions of the first RM and the second RM in this solution are introduced as follows. Specifically, referring to FIG. 2, an embodiment of the first RM in the embodiments of the present invention includes a first receiving unit 201 and a first forwarding unit 202.

The first receiving unit 201 is adapted to receive user IDs and user access location information sent by a user location management server through an E4 interface and receive a QoS request containing a user ID A from a policy decision entity.

The first forwarding unit 202 is adapted to send the user IDs and the user access location information to the second RM and send the QoS request containing the user ID A to the second RM.

Correspondingly, referring to FIG. 3, an embodiment of the second RM in the embodiments of the present invention includes a third receiving unit 301, a first creating unit 302, a second query unit 303, and a first locating unit 304.

The third receiving unit 301 is adapted to receive the user IDs and the user access location information as well as the QoS request containing the user ID A sent by the first RM.

The first creating unit 302 is adapted to create corresponding relations between user IDs and user access location information according to the received user IDs and user access location information.

The second query unit 303 is adapted to query user access location information corresponding to the user ID A in the corresponding relations between user IDs and user access location information created by the first creating unit 302 according to the user ID A in the QoS request.

The first locating unit 304 is adapted to locate user resources according to the user access location information.

This embodiment describes the circumstance that the second RM includes the first creating unit 302. It should be noted that, if the user IDs and the user access location information sent by the first RM to the second RM have specific corresponding relations per se, the first creating unit 302 may be omitted in the second RM.

### II. Signaling carrying solution

In this solution, the first RM 101 stores user IDs and corresponding user access location information locally, and creates corresponding relations between the user IDs and the user access location information. After the policy decision entity 104 sends the QoS request containing the user ID A to the first RM 101, the first RM 101 queries corresponding user access location information in the stored user IDs and user access location information according to the user ID A, that is, queries user access location information corresponding to the user ID A according to the created corresponding relations and the acquired user ID A, and sends the user access location information obtained by query to the second RM 102 through the QoS request message. The second RM 102 locates user resources according to the user access location information. The step of locating the user resources belongs to the prior art, which will not be described herein again.

In this embodiment, the first RM 101 mainly includes a corresponding relation storage module and a query sending module.

The corresponding relation storage module is adapted to store a corresponding relation table between user IDs and user access location information.

The query sending module is adapted to query corresponding user access location information in the relation table stored in the corresponding relation storage module according to a user ID in a received QoS request and send the user access location information to the second RM for processing.

Different functions of the first RM and the second RM in this solution are introduced as follows. Specifically, referring to FIG. 4, another embodiment of the first RM in the embodiments of the present invention includes a second receiving unit 401, a second creating unit 402, a first query unit 403, and a second forwarding unit 404.

The second receiving unit 401 is adapted to receive user IDs and user access location information sent by a user location management server through an E4 interface and receive a QoS request containing a user ID A from a policy decision entity.

The second creating unit 402 is adapted to create corresponding relations between user IDs and user access location information according to the received user IDs and user access location information.

The first query unit 403 is adapted to query user access location information corresponding to the user ID A in the corresponding relations between user IDs and user access location information created by the second creating unit 402 according to the user ID A in the QoS request.

The second forwarding unit 404 is adapted to send the user access location information obtained by query to the second RM.

This embodiment describes the circumstance that the first RM includes the second creating unit 402. It should be noted that, if the user IDs and the user access location information sent by the user location management server to the first RM have specific corresponding relations per se, the second creating unit 402 may be omitted in the first RM.

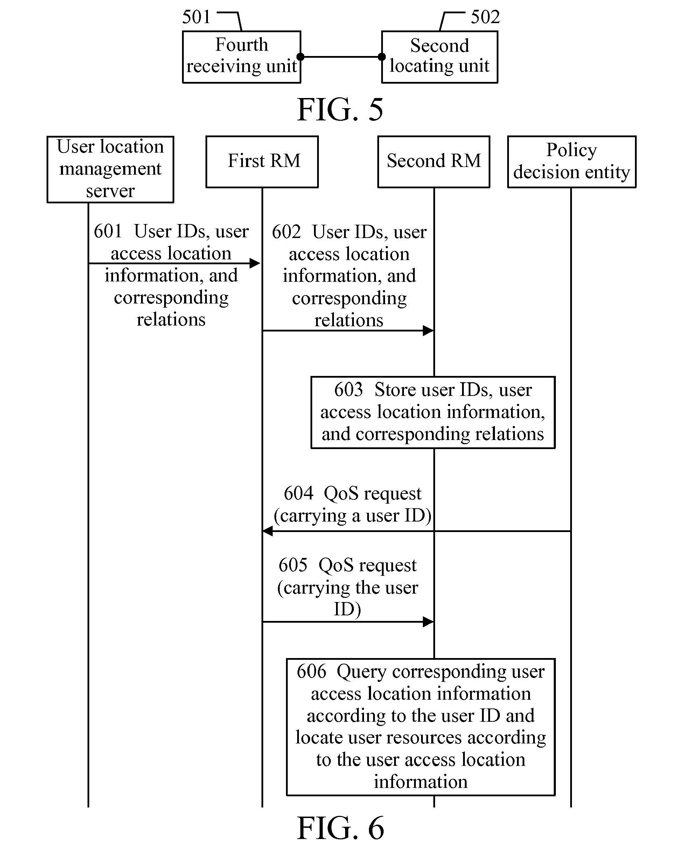

Correspondingly, referring to FIG. 5, another embodiment of the second RM in the embodiments of the present invention includes a fourth receiving unit 501 and a second locating unit 502.

The fourth receiving unit 501 is adapted to receive the user access location information obtained by query sent from the first RM.

The second locating unit 502 is adapted to locate user resources according to the user access location information.

In the above embodiments, two solutions in the embodiments of the present invention have been described, and only the case of having two levels of RMs is described. It should be noted that, if a plurality of RMs exists, multi-level information delivery mode is employed, and the specific implementation thereof is similar to that in the above embodiments.

A method for locating user resources in the embodiments of the present invention is described in detail as follows. Similar to the manner of introducing the embodiment of the communication system, an embodiment of the method for locating user resources in the embodiments of the present invention is introduced in the following two cases.

### I. E4 agent solution

Referring to FIG. 6, an embodiment of the method for locating user resources in the embodiments of the present invention includes the following steps.

In Step 601, a user location management server sends user IDs and user access location information to a first RM.

When a user gets on-line, the user location management server pushes the user ID and user access location information to the first RM through an e4 interface.

In this embodiment, the user ID may be an Internet Protocol (IP) address of the user or a domain name in the form of a fully qualified domain name (FQDN) of the user. It should be noted that, other information for identifying the user may also be adopted as the user ID.

In this embodiment, the user access location information may be an access physical port ID or access logical port ID of the user. It should be noted that, a user access location parameter of other types may also be adopted as the user access location information.

In Step 602, the first RM forwards the user IDs and the user access location information to a second RM.

The first RM forwards the received user IDs and user access location information to the second RM, in which the data transmission may be performed by using an existing signaling channel.

In Step 603, the second RM stores the user IDs and the corresponding user access location information.

The second RM creates a corresponding relation table between user IDs and user access location information according to the received user IDs and the corresponding user access location information. The corresponding relation table may be in the form of a table, an array, or in other data storage forms.

In Step 604, a policy decision entity sends a QoS request containing a user ID A to the first RM.

The user ID A contained in the QoS request is a specific user ID, for example, an ID of a user carrying out the current session.

In Step 605, the first RM forwards the QoS request containing the user ID A to the second RM.

The first RM forwards the received QoS request to the second RM.

In Step 606, the second RM locates user resources.

After receiving the QoS request, the second RM extracts the user ID A in the QoS request, queries user access location information corresponding to the user ID A in the created corresponding relations between user IDs and user access location information, and locates user resources according to the user access location information obtained by query. The specific step of locating the user resources belongs to the prior art, which will not be described herein again.

Since the second RM can acquire the user access location information, the user resource location can be realized according to the user access location information.

### II. Signaling carrying solution

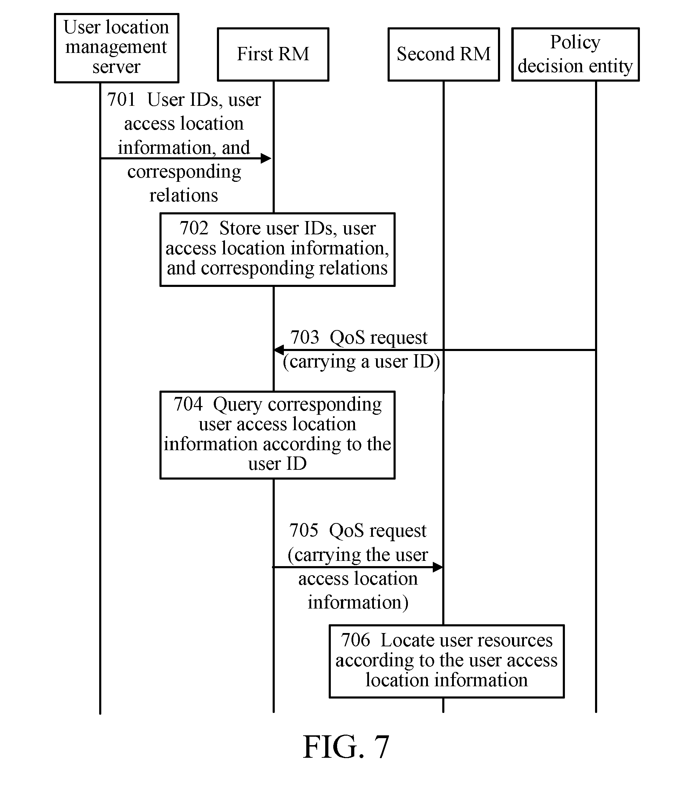

Referring to FIG. 7, another embodiment of the method for locating user resources in the embodiments of the present invention includes the following steps.

In Step 701, a user location management server sends user IDs and user access location information to a first RM.

When a user gets on-line, the user location management server pushes user ID and user access location information to the first RM through an e4 interface.

In this embodiment, the user ID may be an IP address of the user or a domain name in the form of an FQDN of the user. It should be noted that, other information for identifying the user may also be adopted as the user ID.

In this embodiment, the user access location information may be an access physical port ID or access logical port ID of the user. It should be noted that, a user access location parameter of other types may also be adopted as the user access location information.

In Step 702, the first RM stores the received user IDs and user access location information.

The first RM creates a corresponding relation table between user IDs and user access location information according to the received user IDs and the corresponding user access location information. The corresponding relation table may be in the form of a table, an array, or in other data storage forms.

In Step 703, a policy decision entity sends a QoS request containing a user ID A to the first RM.

The user ID A contained in the QoS request is a specific user ID, for example, an ID of a user carrying out the current session.

In Step 704, the first RM queries user access location information.

After receiving the QoS request, the first RM extracts the user ID A in the QoS request and queries user access location information corresponding to the user ID A in the created corresponding relations between user IDs and user access location information.

In Step 705, the first RM sends the QoS request to a second RM.

After obtaining the user access location information by query, the first RM sends the QoS request containing the user access location information to the second RM.

In Step 706, the second RM locates user resources.

After receiving the QoS request, the second RM extracts the user access location information in the QoS request and locates user resources according to the user access location information. The specific step of locating the user resources belongs to the prior art, which will not be described herein again.

Since the second RM can acquire the user access location information, the user resource location can be realized according to the user access location information.

Those of ordinary skill in the art should understand that, all or a part of the steps in the method according to the embodiments can be implemented by a program instructing relevant hardware, and the program may be stored in a computer readable storage medium. When the program is executed, the following steps are performed.

A second RM receives user location related information sent by a first RM.

The second RM locates user resources according to the user location related information.

The user access location information mentioned herein may be, but not limited to, an access physical port ID or access logical port ID (for example, VLAN PVC) of user equipment or an ID of access equipment accessing the user equipment (an ID of a digital subscriber line access multiplexer (DSLAM)).

The user ID mentioned herein may be an IP address of user equipment, a user name, or a user ID in the form of an FQDN.

In the above embodiments, the first RM may be an RM managing a metropolitan core network (or referred to as a metro network, which ranges from a broadband network gateway (BNG) to a core backbone network border gateway (BGW) in an area). In this case, the second RM is an RM managing resources of access and aggregate network (ranging between a network access node (AN) and a BNG).

In addition, the first RM may be an RM managing resources of an access converged network. In this case, the second RM is an RM managing resources of a user access network (a last-mile access line between an AN and a user terminal). In this case, the second RM may be implemented in a packet data network delivery node, for example, implemented in an AN or in a BNG.

The above-mentioned storage medium may be a read-only memory (ROM), a magnetic disk, or an optical disk.

The method, communication system, and related equipment for locating user resources provided in the present invention have been introduced in detail. Those of ordinary skill in the art can make variations to the present invention in terms of the specific implementations and application scopes according to the ideas of the embodiments of the present invention. Therefore, the specification shall not be construed as limitations to the present invention.

## Claims

1. A method for locating user resources, comprising:
receiving, by a second resource manager, RM, user location related information sent by a first RM; and
locating, by the second RM, user resources according to the user location related information.

2. The method according to claim 1, wherein the user location related information is a user identifier, ID, or user access location information.

3. The method according to claim 1 or 2, wherein when the user location related information sent by the first RM is a user ID,
the second RM determines corresponding user access location information according to the received user ID and locates user resources according to the user access location information.

4. The method according to claim 3, wherein before the receiving by the second RM the user location related information sent by the first RM, the method further comprises:
receiving, by the second RM, user IDs and user access location information sent by the first RM; and
creating, by the second RM, a corresponding relation table between user IDs and user access location information according to the received user IDs and user access location information; and
the determining by the second RM the corresponding user access location information according to the received user ID further comprises:
determining, by the second RM, the corresponding user access location information in the relation table according to the received user ID.

5. The method according to claim 3, wherein the user ID is carried in a quality of service, QoS, request sent by the first RM.

6. The method according to claim 2, wherein when the received user location related information is user access location information, before the receiving by the second RM the user location related information sent by the first RM, the method further comprises:
creating, by the first RM, a corresponding relation table between user IDs and user access location information according to received user IDs and user access location information;
after receiving a QoS request containing a user ID, querying, by the first RM, user access location information corresponding to the user ID in the QoS request in the corresponding relation table between user IDs and user access location information; and
sending, by the first RM, the user access location information to the second RM.

7. The method according to claim 2, wherein
the user access location information comprises an access physical port ID or access logical port ID of a user equipment or an ID of an access equipment accessing the user equipment; and
the user ID comprises an Internet Protocol, IP, address of a user equipment, a user name, or a user ID in a form of a fully qualified domain name, FQDN.

8. The method according to any one of claims 2 to 6, further comprising:
managing, by the first RM, network resources of a metropolitan core network, and managing, by the second RM, network resources of an access converged network; or
managing, by the first RM, network resources of an access converged network, and managing, by the second RM, network resources of a user access line.

9. A communication system, comprising:
a first resource manager, RM, adapted to send a quality of service, QoS, request containing a user identifier, ID, to a second RM; and
a second RM, adapted to determine corresponding user access location information according to the user ID in the QoS request sent by the first RM, and locate user resources according to the user access location information.

10. The communication system according to claim 9, wherein the second RM further comprises:
a storage module, adapted to store a corresponding relation table between user IDs and user access location information; and
a query processing module, adapted to query required user access location information in the corresponding relation table between user IDs and user access location information according to the user ID in the received QoS request and then locate user resources.

11. The communication system according to claim 9 or 10, further comprising:
a user location management server, adapted to send the user IDs and the user access location information to the first RM; and
a policy decision entity, adapted to send the QoS request containing the user ID to the first RM.

12. A communication system, comprising:
a first resource manager, RM, adapted to determine corresponding user access location information according to a user identifier, ID, in a received quality of service, QoS, request; and
a second RM, adapted to locate user resources according to the user access location information sent by the first RM.

13. The communication system according to claim 12, wherein the first RM further comprises:
a corresponding relation storage module, adapted to store a corresponding relation table between user IDs and user access location information; and
a query sending module, adapted to query the corresponding user access location information in the relation table stored in the corresponding relation storage module according to the user ID in the received QoS request and send the user access location information to the second RM for processing.

14. is is The communication system according to any one of claims 12 or 13, further comprising:
a user location management server, adapted to send the user IDs and the user access location information to the first RM; and
a policy decision entity, adapted to send the QoS request containing the user ID to the first RM.

15. A resource manager, RM, comprising:
a second receiving unit, adapted to receive a quality of service, QoS request containing a user identifier, ID;
a first query unit, adapted to query corresponding user access location information according to the user ID in the QoS request; and
a second forwarding unit, adapted to send the user access location information obtained by query to another RM.

16. The RM according to claim 15, further comprising:
a first creating unit, adapted to create a corresponding relation table between user IDs and user access location information, wherein the first query unit queries the corresponding user access location information in the corresponding relation table according to the user ID in the QoS request.
A resource manager, RM, comprising:
a third receiving unit, adapted to receive a quality of service, QoS, request containing a user identifier, ID, sent by another RM;
a second query unit, adapted to query corresponding user access location information according to the user ID in the QoS request; and
a first locating unit, adapted to locate user resources according to the user access location information.
The RM according to claim 17, further comprising:
a second creating unit, adapted to create corresponding relations between received user IDs and user access location information, wherein the second query unit queries the corresponding user access location information in the corresponding relations according to the user ID in the QoS request.
